# EUROPEAN PATENT APPLICATION

(11) **EP 4 471 477 A1**
(43) Date of publication of application: **04.12.2024**
(21) Application number: 24177673.1
(22) Date of filing: 23.05.2024
(51) Int. Cl.: G02B 6/44

(54) **DEVICES, SYSTEMS, AND METHODS FOR ATTACHING SPLICE TRAYS**

(30) Priority: 30.05.2023 US 202363469607 P
(71) Applicant: Corning Research & Development Corporation, Corning, New York 14831 (US)
(72) Inventor: KLAK, Robert Tomasz, 98220 Zdunska Wola (PL); KRECZMER, Wojciech, 91-849 Lodz (PL); McKINNEY, Larry Todd, Texas, 76248 (US); ZAPPEK, Andreas, 46539 Dinslaken (DE)
(74) Representative: Reddie & Grose LLP

(57) **Abstract**

Systems and assemblies are provided that include a base structure, a first splice tray, a second splice tray, and/or an adapter. The base structure includes a plurality of splice tray connection features that each have attachment features configured to receive integrally formed first splice tray attachment features of the first splice tray and integrally formed third splice tray attachment features of the adapter. The adapter is connectable to the second splice tray such that the second splice tray can be received by the base structure. The second splice tray has integrally formed second attachment features that are connectable to the adapter. The integrally formed third splice tray attachment features of the adapter are configured to guide a cable into the base structure when the second splice tray is attached to the adapter and when the adapter is attached to the base structure.

## Description

### PRIORITY APPLICATION

This application claims the benefit of priority of U.S. Provisional Application No. 63/469,607, filed on May 30, 2023, the content of which is relied upon and incorporated herein by reference in its entirety.

### FIELD OF THE DISCLOSURE

Embodiments of the present disclosure relate generally to network communications equipment and, more particularly, to devices and systems for attaching splice trays, such as within communications equipment cabinets and other enclosures.

### BACKGROUND OF THE DISCLOSURE

Cables (such as those used to carry communication fiber) are often routed in and out of communications equipment cabinets and other enclosures in order to connect with various communications equipment. The cables are often routed into various structures within the enclosures in a manner that maintains a certain organization and/or stability, and such structures are often configured to receive only select types of splice trays. For example, enclosures may be configured to receive only one type of splice tray, and as such, structures within the enclosures must be modified and/or replaced for a different type of splice tray to be used. Such modifications and/or replacements that must be made to the enclosures are time-consuming, expensive, and require a high level of skill from an installer.

Improvements in the foregoing are desired.

### BRIEF SUMMARY OF THE DISCLOSURE

Embodiments of the present disclosure provide for various assemblies and systems that cure many of the above noted defects and difficulties. In this regard, various embodiments of the present disclosure provide systems and assemblies for enabling installation of different types of splice trays within a base structure of an enclosure in a way that allows for various types of splice trays (e.g., splice trays with different cable organization patterns) to be installed in the same base structure at a same time.

As noted herein, current enclosures contain splice trays and base structures in a configuration that only allows one type of splice tray to be installed within a certain base structure. This reduces functional optionality for changing the splice trays secured within a base structure. Further, it would be useful to be able to use more than one type of splice tray within the same base structure, at the same time, such that cables may be organized in different organizational patterns on different splice trays within a same base structure.

The systems and assemblies disclosed herein include base structures that are able to receive and secure one or more splice trays of varying types using one or more adapters. Example systems and assemblies disclosed herein have a base structure with cable routing features and a plurality of splice tray connection features. The example systems and assemblies may also include a first splice tray with integrally formed first splice tray attachment features that may be attachable to a first attachment feature of a first one of the plurality of splice tray connection features of the base structure. The example systems and assemblies may also include a second splice tray with integrally formed second splice tray attachment features that may be attachable to an adapter, and the adapter may include integrally formed third splice tray attachment features that may be attachable to a second attachment feature of a second one of the plurality of splice tray connection features of the base structure. The base structure thus may be configured such that the first splice tray and the second splice tray, through the adapter, can be attached to the base structure at the same time. This allows for different organization patterns within the same base structure. For example, the first splice tray may be configured to organize a cable in a first organization pattern, and the second splice tray may be configured to organize the cable in a different, second organization pattern.

In an example embodiment, a system is provided. The system includes a base structure including one or more cable routing features and a plurality of splice tray connection features. Each of the plurality of splice tray connection features includes an attachment feature configured to receive a corresponding splice tray attachment feature when a splice tray is connected to the base structure using one of the plurality of splice tray connection features, and each of the plurality of splice tray connection features is configured to receive a cable routed in a first configuration within the base structure coming from a connected splice tray and leading to the one or more cable routing features of the base structure. The system further includes a first splice tray configured to organize the cable in a first organization pattern, and the first splice tray includes integrally formed first splice tray attachment features that are configured to guide the cable into the one or more cable routing features of the base structure when the integrally formed first splice tray attachment features of the first splice tray are attached to a first attachment feature of a first one of the plurality of splice tray connection features of the base structure. The system also includes a second splice tray configured to organize the cable in a second organization pattern that is different than the first organization pattern, and the second splice tray includes integrally formed second splice tray attachment features. The system also includes an adapter for connection to the second splice tray, and the adapter includes integrally formed third splice tray attachment features that are configured to guide the cable into the one or more cable routing features of the base structure when the integrally formed second splice tray attachment features of the second splice tray are attached to the adapter and when the integrally formed third splice tray attachment features of the adapter are attached to a second attachment feature of a second one of the plurality of splice tray connection features of the base structure.

In some embodiments, the integrally formed first splice tray attachment features may be the same as the integrally formed third splice tray attachment features.

In some embodiments, the integrally formed second splice tray attachment features of the second splice tray may be configured to guide the cable into one or more second cable routing features of a second base structure when the integrally formed second splice tray attachment features of the second splice tray are attached to a third attachment feature of one of a second plurality of splice tray connection features of the second base structure.

In some embodiments, the adapter may include a first portion including the integrally formed third splice tray attachment features and a second portion including a first connection feature that is configured to interact with a second connection feature on the second splice tray.

In some embodiments, the first connection feature and the second connection feature may be configured to snap together.

In some embodiments, the first portion may further include a third connection feature that is configured to interact with a fourth connection feature on a first end of the second splice tray, and the first end of the second splice tray may be proximate the base structure when the integrally formed second splice tray attachment features of the second splice tray are attached to the adapter and when the integrally formed third splice tray attachment features of the adapter are attached to the second attachment feature of the second one of the plurality of splice tray connection features of the base structure.

In some embodiments, the third connection feature and the fourth connection feature may be configured to snap together.

In some embodiments, the second connection feature may be located in a middle portion of the second splice tray.

In some embodiments, the second connection feature may be located on a second end of the second splice tray, and the second end of the second splice tray may be opposite the second attachment feature of the second one of the plurality of splice tray connection features of the base structure when the integrally formed second splice tray attachment features of the second splice tray are attached to the adapter and when the integrally formed third splice tray attachment features of the adapter are attached to the second attachment feature of the second one of the plurality of splice tray connection features of the base structure.

In some embodiments, the adapter may be configured to wrap around at least a portion of a bottom side of the second splice tray.

In some embodiments, the adapter may be configured to be removably connected to the second splice tray.

In some embodiments, the integrally formed third splice tray attachment features of the adapter may include one or more conduits for guiding the cable into the one or more cable routing features of the base structure.

In some embodiments, the integrally formed first splice tray attachment features of the first splice tray may include one or more conduits for guiding the cable into the one or more cable routing features of the base structure.

In some embodiments, the adapter may be comprised of a plastic material.

In some embodiments, the first splice tray and the second splice tray may be comprised of a plastic material.

In another example embodiment, an enclosure is provided. The enclosure includes a base structure including one or more cable routing features and a plurality of splice tray connection features. Each of the plurality of splice tray connection features includes an attachment feature configured to receive a corresponding splice tray attachment feature when a splice tray is connected to the base structure using one of the plurality of splice tray connection features, and each of the plurality of splice tray connection features is configured to receive a cable routed in a first configuration within the base structure coming from a connected splice tray and leading to the one or more cable routing features of the base structure. The enclosure also includes a first splice tray configured to organize the cable in a first organization pattern, and the first splice tray includes integrally formed first splice tray attachment features that are configured to guide the cable into the one or more cable routing features of the base structure when the integrally formed first splice tray attachment features of the first splice tray are attached to a first attachment feature of a first one of the plurality of splice tray connection features of the base structure. The enclosure also includes a second splice tray configured to organize the cable in a second organization pattern that is different than the first organization pattern, and the second splice tray includes integrally formed second splice tray attachment features. The enclosure also includes an adapter for connection to the second splice tray, and the adapter includes integrally formed third splice tray attachment features that are configured to guide the cable into the one or more cable routing features of the base structure when the integrally formed second splice tray attachment features of the second splice tray are attached to the adapter and when the integrally formed third splice tray attachment features of the adapter are attached to a second attachment feature of a second one of the plurality of splice tray connection features of the base structure.

In some embodiments, the integrally formed second splice tray attachment features of the second splice tray may be configured to guide the cable into one or more second cable routing features of a second base structure when the integrally formed second splice tray attachment features of the second splice tray are attached to a third attachment feature of one of a second plurality of splice tray connection features of the second base structure.

In some embodiments, the adapter may include a first portion including the integrally formed third splice tray attachment features and a second portion including a first connection feature that is configured to interact with a second connection feature on the second splice tray.

In another example embodiment, an assembly is provided. The assembly includes a splice tray configured to organize a cable in an organization pattern, and the splice tray includes integrally formed first splice tray attachment features. The assembly also includes an adapter for connection to the splice tray. The adapter includes integrally formed second splice tray attachment features that are configured to guide the cable into one or more cable routing features of a base structure when the integrally formed first splice tray attachment features of the splice tray are attached to the adapter and when the integrally formed second splice tray attachment features of the adapter are attached to an attachment feature of one of a plurality of splice tray connection features of the base structure. Each of the plurality of splice tray connection features includes an attachment feature configured to receive a corresponding splice tray attachment feature when a splice tray is connected to the base structure using one of the plurality of splice tray connection features, and each of the plurality of splice tray connection features is configured to receive the cable routed in a first configuration within the base structure coming from a connected splice tray and leading to the one or more cable routing features of the base structure.

In some embodiments, the integrally formed first splice tray attachment features of the splice tray may be configured to guide the cable into one or more second cable routing features of a second base structure when the integrally formed first splice tray attachment features of the splice tray are attached to a second attachment feature of one of a second plurality of splice tray connection features of the second base structure.

In another example embodiment, an adapter for connection to a splice tray is provided. The adapter includes integrally formed first splice tray attachment features that are configured to provide a cable into one or more cable routing features of a base structure when integrally formed second splice tray attachment features of the splice tray are attached to the adapter and when the integrally formed first splice tray attachment features of the adapter are attached to an attachment feature of one of a plurality of splice tray connection features of the base structure. Each of the plurality of splice tray connection features includes an attachment feature configured to receive a corresponding splice tray attachment feature when a splice tray is connected to the base structure using one of the plurality of splice tray connection features, and each of the plurality of splice tray connection features is configured to receive the cable routed in a first configuration within the base structure coming from a connected splice tray and leading to the one or more cable routing features of the base structure. The splice tray is configured to organize the cable in an organization pattern.

In another example embodiment, a method of installing a splice tray is provided. The method includes connecting integrally formed first splice tray attachment features of a splice tray to an adapter. The splice tray is configured to organize a cable in an organization pattern, and the adapter includes integrally formed second splice tray attachment features. The method further includes connecting the integrally formed second splice tray attachment features of the adapter to an attachment feature of one of a plurality of splice tray connection features of a base structure and routing the cable from the splice tray to one or more cable routing features on the base structure.

In some embodiments, routing the cable from the splice tray to one or more cable routing features on the base structure may include routing the one or more cables through one or more conduits on the adapter.

In some embodiments, the adapter may include a first portion including the integrally formed second splice tray attachment features and a second portion including a first connection feature that is configured to interact with a second connection feature on the splice tray.

In some embodiments, the method may further include connecting integrally formed third splice tray attachment features of a second splice tray to a second attachment feature of a second one of the plurality of splice tray connection features of the base structure. The second splice tray may be configured to organize the cable in a second organization pattern.

### BRIEF DESCRIPTION OF THE DRAWINGS

Having thus described embodiments of the present disclosure in general terms, reference will now be made to the accompanying drawings, which are not necessarily drawn to scale, and wherein:
FIG. 1 illustrates a perspective view of an example base structure containing a first splice tray with a first splice tray cover and a second splice tray with a second splice tray cover and an adapter, in accordance with some embodiments discussed herein;
FIG. 2 illustrates a perspective view of the first splice tray of FIG. 1, in accordance with some embodiments discussed herein;
FIG. 3 illustrates a zoomed-in view of the first splice tray attachment features of the first splice tray of FIGs. 1-2, in accordance with some embodiments discussed herein;
FIG. 4 illustrates a perspective view of the second splice tray of FIG. 1, in accordance with some embodiments discussed herein;
FIG. 5 illustrates a zoomed-in view of first splice tray attachment features of the first splice tray of FIGs. 1-3 and second splice tray attachment features of the second splice tray of FIGs. 1 and 4, in accordance with some embodiments discussed herein;
FIG. 6A illustrates a perspective view of the adapter of FIG. 1, in accordance with some embodiments discussed herein;
FIG. 6B illustrates a perspective view of the first portion of the adapter of FIGs. 1 and 6A, in accordance with some embodiments discussed herein;
FIG. 6C illustrates a perspective view of the second portion of the adapter of FIGs. 1 and 6A-6B, in accordance with some embodiments discussed herein;
FIG. 6D illustrates a zoomed-in perspective view of a locking connection feature of the first portion of the adapter of FIGs. 1 and 6A-6C, in accordance with some embodiments discussed herein;
FIG. 7 illustrates the base structure of FIG. 1 containing the first splice tray of FIGs. 1-3, in accordance with some embodiments discussed herein;
FIG. 8 illustrates the base structure of FIGs. 1 and 7 containing the first splice tray of FIGs. 1-3 and 7, with cables (shown in partial form) routed therethrough, in accordance with some embodiments discussed herein;
FIG. 9 illustrates a perspective view of the second splice tray of FIGs. 1 and 4-5 within but not connected to the base structure of FIGs. 1 and 7-8, in accordance with some embodiments discussed herein;
FIG. 10 illustrates a perspective view of the second splice tray of FIGs. 1, 4-5, and 9 with the adapter of FIGs. 1 and 6A-6D, in accordance with some embodiments discussed herein;
FIG. 11A illustrates a zoomed-in perspective view of a first end of the second splice tray of FIGs. 1, 4-5, and 9-10 connected to a first portion of the adapter of FIGs. 1, 6A-6D, and 10, in accordance with some embodiments discussed herein;
FIG. 11B illustrates a zoomed-in perspective view of a second end of the second splice tray of FIGs. 1, 4-5, and 9-11A connected to a second portion of the adapter of FIGs. 1, 6A-6D, and 11A, in accordance with some embodiments discussed herein;
FIG. 12 illustrates a bottom perspective view of the second splice tray of FIGs. 1, 4-5, and 9-11B connected to the adapter of FIGs. 1, 6A-6D, and 11A-11B, in accordance with some embodiments discussed herein;
FIG. 13 illustrates the second splice tray attachment features of the second splice tray of FIGs. 1, 4-5, and 9-12 along with third splice tray attachment features of the adapter of FIGs. 1, 6A-6D, and 11A-12, the adapter being connected to the second splice tray, in accordance with some embodiments discussed herein;
FIG. 14 illustrates a perspective view of the second splice tray of FIGs. 1, 4-5, and 9-13 connected to the adapter of FIGs. 1, 6A-6D, and 11A-13, the second splice tray and the adapter connected to the base structure of FIGs. 1 and 7-9, in accordance with some embodiments discussed herein;
FIG. 15 illustrates the base structure of FIGs. 1, 7-9, and 14 containing the first splice tray of FIGs. 1-3 and 7-8 and the second splice tray of FIGs. 1, 4-5, and 9-14 with the adapter of FIGs. 1, 6A-6D, and 11A-14, in accordance with some embodiments discussed herein;
FIG. 16 illustrates the base structure of FIGs. 1, 7-9, and 14-15 containing the second splice tray of FIGs. 1, 4-5, and 9-15 connected to the adapter of FIGs. 1, 6A-6D, and 11A-15, with cables (shown in partial form) routed therethrough, in accordance with some embodiments discussed herein; and
FIG. 17 illustrates a flowchart for an example method of installing a splice tray, in accordance with some embodiments discussed herein.

### DETAILED DESCRIPTION

Exemplary embodiments of the present disclosure will be described more fully hereinafter with reference to the accompanying drawings, in which some, but not all embodiments of the present disclosure are shown. Indeed, the present disclosure may be embodied in many different forms and should not be construed as limited to the exemplary embodiments set forth herein; rather, these embodiments are provided so that this disclosure will satisfy applicable legal requirements. Like reference numerals refer to like elements throughout.

Due in part to its extremely wide bandwidth and low noise operation, optical fiber is increasingly being used for a variety of applications, including but not limited to broadband voice, video, and data transmission. Fiber optic communications networks may include a number of interconnection points (such as at which multiple optical fibers are interconnected) and/or connection terminals (*e.g.,* network access point (NAP) enclosures, optical network terminals (ONTs), network interface devices (NIDs)). Accordingly, corresponding fiber optic cables may be managed (e.g., routed through, split, reconfigured, connected, etc.) in many different communications equipment cabinets and other enclosures, some of which may include one or more splice trays.

Systems and assemblies according to the present disclosure allow maintenance personnel to organize cables in an improved manner, such as leading into and/or within enclosures, as discussed herein. In this regard, various example systems and assemblies described herein may enable different types of splice trays to be installed into a single type of base structure within an enclosure. In some embodiments, example systems and assemblies may be configured to include one or more adapters such that one or more splice trays can be adjusted or changed for compatibility with the system, such as by maintenance personnel, an installer, secondary operator/installer, etc. for example.

Various described systems and assemblies provide for improved compliance by maintenance personnel (including, notably, novice maintenance personnel) by offering a simple method of organizing and connecting different types of splice trays within base structures that may be located within, e.g., communications equipment cabinets or other enclosures.

While some of the illustrated and described embodiments focus on use of various embodiments in base structures within enclosures, any type of enclosure or base structure is contemplated for use with various embodiments. For example, the disclosed systems and assemblies may be employed in many different fiber optic management scenarios, such as in fiber distribution hub cabinets, multi-dwelling unit cabinets, front-end and/or back-end cabinets, closures, or other terminals. In some embodiments, various concepts and designs may be easily adjusted for any communications equipment, such as for use within racks, among other communications equipment.

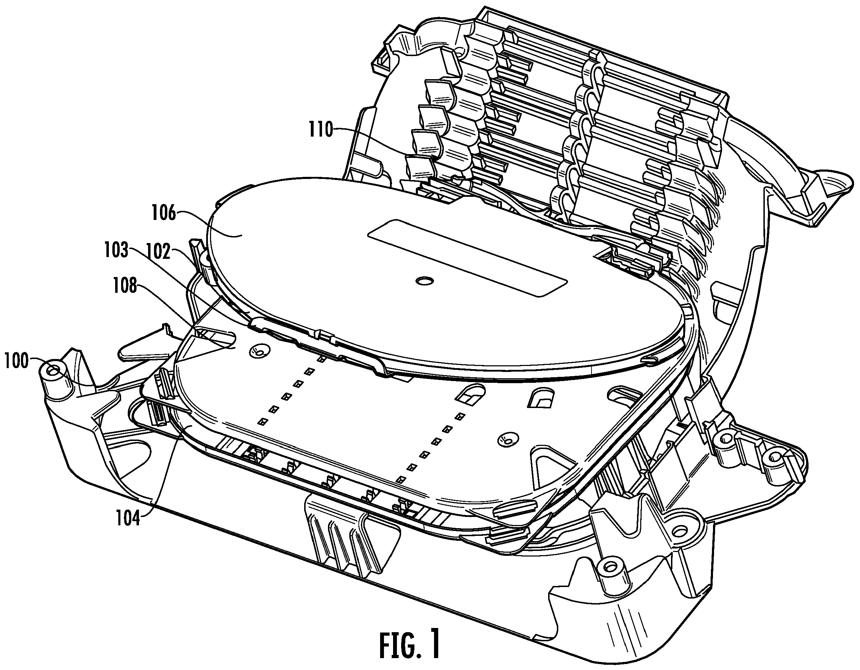

FIG. 1 illustrates an example base structure 100, which may be installed within a communications architecture (e.g., building or other network). The base structure 100 includes a plurality of splice tray attachment features 110 configured to optionally receive splice trays. In the illustrated embodiment, the base structure 100 contains a first splice tray 104, a first slice tray cover 108, a second splice tray 102, a second splice tray cover 106, and an adapter 103 connected to the first splice tray 102. These components are connected to the base structure 100 at the splice attachment features 110 as shown. In some embodiments, the plurality of splice tray connection features 110 on the base structure 100 and the splice trays 104, 106 and corresponding covers 106, 108 attached thereto may be configured such that the splice trays 104, 106 and corresponding covers 106, 108 are rotatable about axes defined by the connection features 110. As will be described in more detail herein, the first splice tray 104 may be configured with integrally formed first splice tray attachment features, the second splice tray 102 may be configured with integrally formed second splice tray attachment features, and the adapter 103 may be configured with integrally formed third splice tray attachment features. The he splice tray attachment features 110 may enable splice trays with certain splice tray attachment features to be able to be installed within the base structure 100.

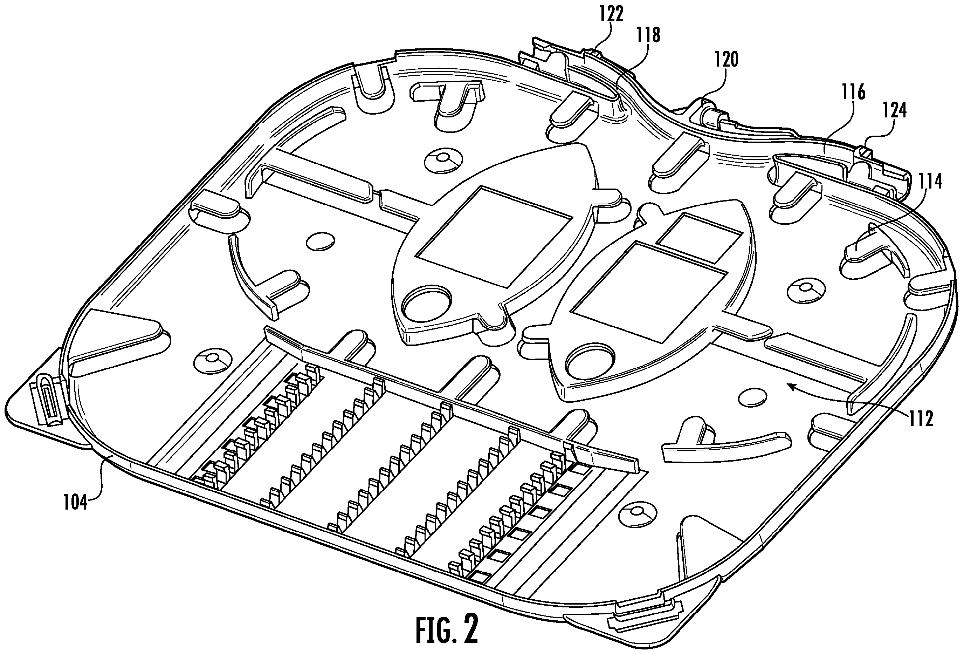

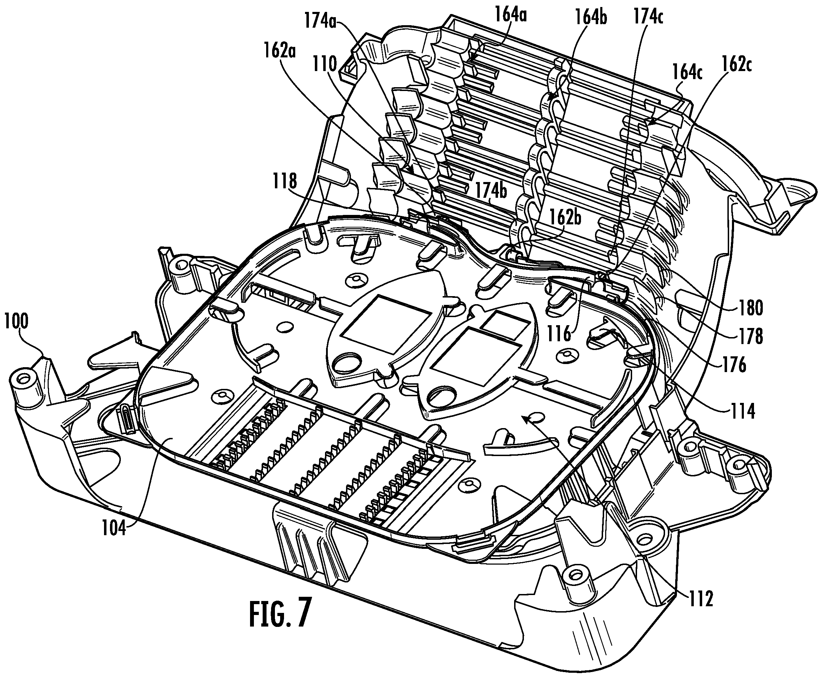

FIG. 2 shows the first splice tray 104 with first cable organization structures 112, such as first tab 114, that are configured to organize one or more cables in a first organization pattern. The first splice tray 104 also includes integrally formed first attachment features. For example, the first splice tray 104 may include a first attachment feature 122, a second attachment feature 120, and a third attachment feature 124. The first attachment feature 122, second attachment feature 120, and third attachment feature 124 may be connectable to one of the plurality of splice tray connection features 110 of the base structure 100. For example, the first attachment feature 122 may be configured as a rod-like element that is slidable within an aperture of the first attachment feature 162a of the plurality of splice tray connection features 110 (as shown in FIG. 7). Similarly, the third attachment feature 124 may be configured as a rod-like element that is slidable within an aperture of the third attachment feature 162c of the plurality of splice tray connection features 110 (as shown in FIG. 7). The second attachment feature 120 may be configured as a cylindrical element that is slidable within a larger looped element of the second attachment feature 162b of the plurality of splice tray connection features 110 (as shown in FIG. 7). In other embodiments, the first splice tray 104 may only have the second attachment feature 120 and may still be connectable to one of the plurality of splice tray connection features 110 of the base structure 100. The first splice tray 104 may also include a first conduit 118 and a second conduit 116 within the integrally formed first splice tray attachment features that are configured to guide one or more cables from the first splice tray 104 to one or more cable routing features of a base structure (e.g., base structure 100) when the first splice tray is connected to one of a plurality of splice tray connection features of the base structure (e.g., to one of the plurality of splice tray connection features 110 of the base structure 100).

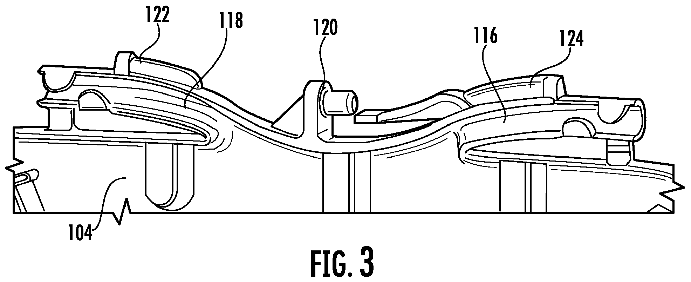

FIG. 3 is a zoomed-in view of a portion of the first splice tray 104 that includes the integrally formed first splice tray attachment features. As shown, the integrally formed first splice tray attachment features include the first attachment feature 122, the second attachment feature 120, and the third attachment feature 124, as well as the first conduit 118 and the second conduit 116.

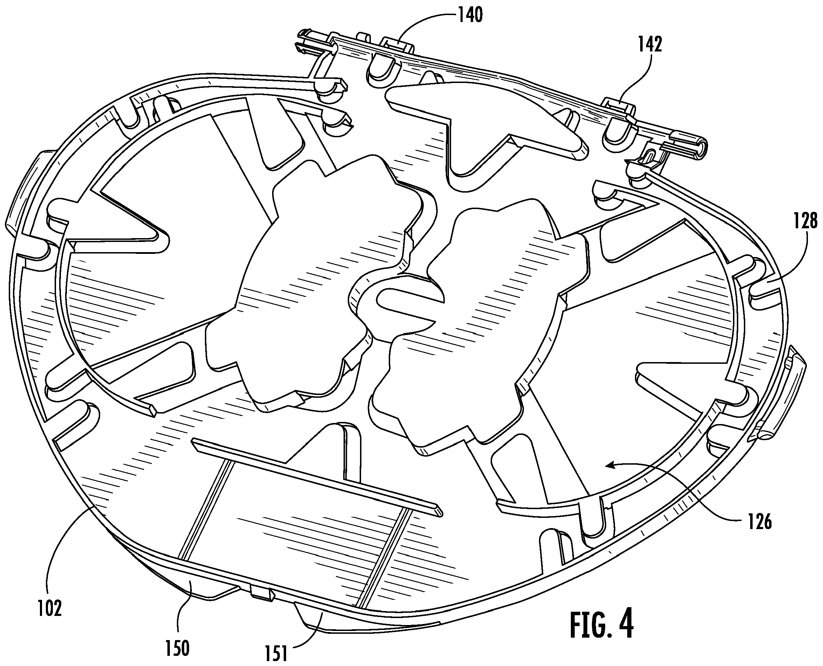

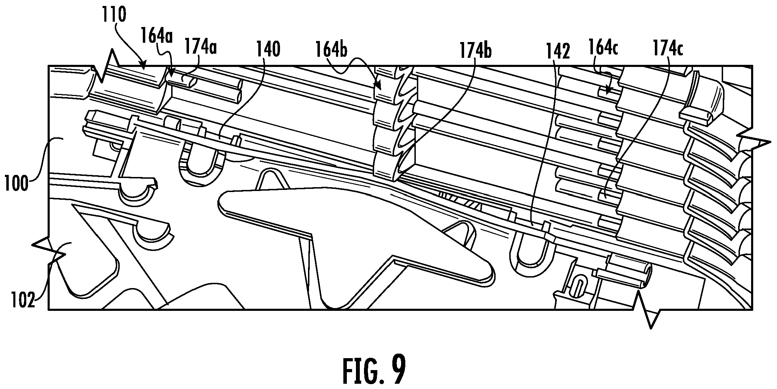

FIG. 4 shows the second splice tray 102 with cable organization structures 126, such as tab 128, that are configured to organize one or more cables in a second organization pattern that is different than the first organization pattern of the first splice tray 104. The second splice tray 102 also includes integrally formed second splice tray attachment features. For example, the second splice tray 102 includes a first attachment feature 140 and a second attachment feature 142. The first attachment feature 140 and the second attachment feature 142 are not connectable with any of the plurality of splice tray connection features 110 of the base structure 100. However, the first attachment feature 140 and the second attachment feature 142 of the second splice tray 102 may be connectable with one of a plurality of splice tray connection features of another base structure. For example, the integrally formed second splice tray attachment features of the second splice tray 102 may be configured to guide a cable into one or more second cable routing features of a second base structure when the integrally formed second splice tray attachment features of the second splice tray 102 are attached to a third attachment feature of one of a second plurality of splice tray connection features of the second base structure. It should be appreciated that the first attachment feature 140 and the second attachment feature 142 of the second splice tray 102 may have any configuration other than the configuration shown in FIG. 9.

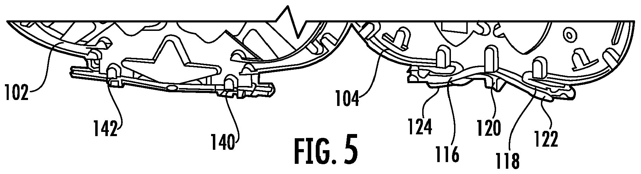

FIG. 5 shows the difference between the integrally formed second splice tray attachment features of the second splice tray 102 and the integrally formed first splice tray attachment features of the first splice tray 104. For example, while the second splice tray 102 may include structural features designed to guide a cable into a different base structure, the second splice tray 102 does not include conduits such as the first conduit 118 and the second conduit 116 of the first splice tray 104 that are designed to guide cables into a specific configuration with respect to the base structure 100. Additionally, the second splice tray 102 does not include a middle attachment feature such as the second attachment feature 120 of the first splice tray 104. Because of these differences, the first splice tray 104 is connectable to a row of the plurality of splice tray connection features 110 of the base structure 100, but the second splice tray 102 needs adapter 103 to connect to base structure 100. Alternatively, the second splice tray 102 may be connectable to a row of a plurality of splice tray connection features of another base structure, while the first splice tray 104 may not be.

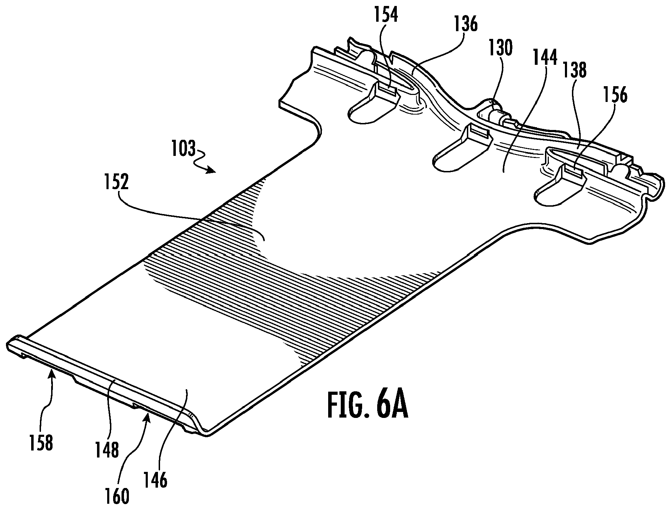

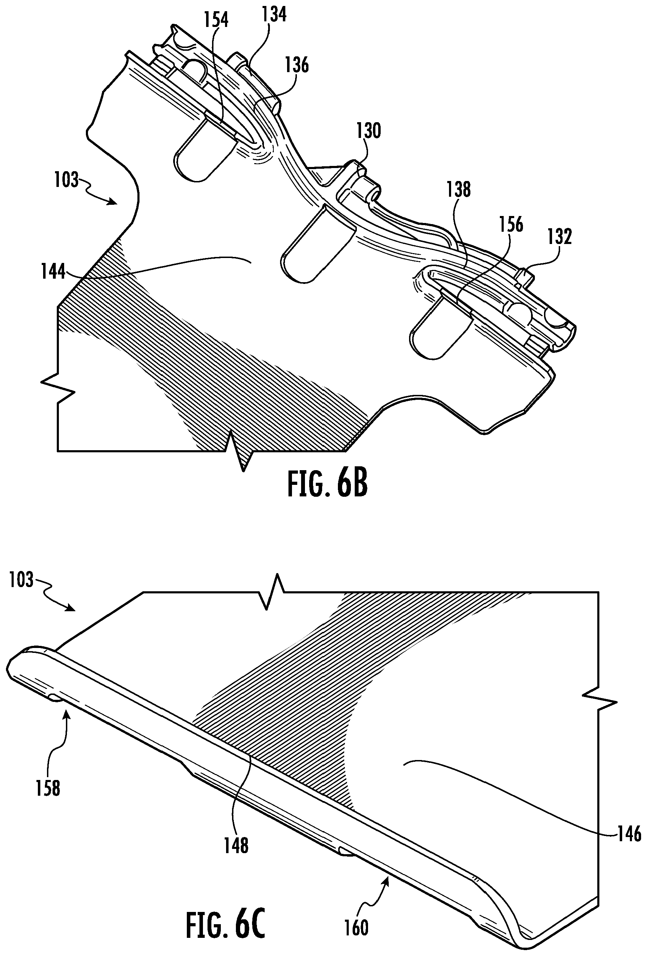

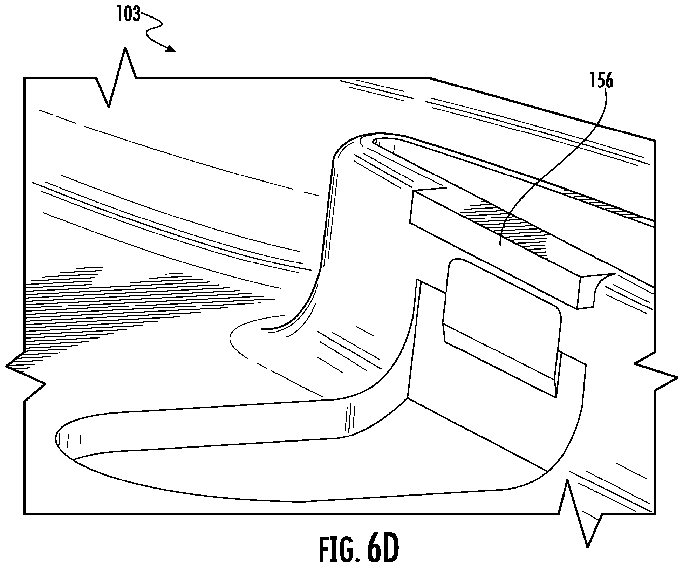

FIGs. 6A-6D show different views of the adapter 103, which is configured to attach to the second splice tray 102 such that the second splice tray 102 can be installed into the base structure 100. FIG. 6A shows a perspective view of the entire adapter 103, including the first portion 144, the middle portion 152, and the second portion 146. FIG. 6B is a zoomed-in view of the first portion 144 and shows the first attachment feature 134, the second attachment feature 130, and the third attachment feature 132 along with the first conduit 136 and the second conduit 138. FIG. 6B also shows the first tab 154 and the second tab 156 that are part of the connection feature of the adapter 103 that is connectable to the second splice tray 102 by way of the first attachment feature 140 and the second attachment feature 142. FIG. 6C shows the second portion 146 of the adapter 103, which includes the first aperture 158 and the second aperture 160, which are part of the first connection feature that is connectable to the first tab 150 and the second tab 151 of the second connection feature of the second splice tray 102, FIG. 6C also shows the lip 148 that is configured to snap around the first tab 150 and the second tab 151 of the second splice tray 102 such that the first tab 150 can protrude at least partially through the first aperture 158 and such that the second tab 151 can protrude at least partially through the second aperture 160. FIG. 6D is a zoomed-in view of the second tab 156 of the first portion 144 of the adapter 103 that is configured to snap around the second attachment feature 142 of the second splice tray 102.

Referring now to FIG. 7, base structure 100 with the first splice tray 104 attached therein is provided. As shown, the first splice tray 104 has first cable organization structures 112 such as first tab 114 that are configured to organize one or more cables in a first organization pattern. Moreover, first splice tray 104 is connected to base structure 100 at one of the plurality of splice tray attachment features 110. The plurality of splice tray attachment features 110 include a first column of attachment features 164a, a second column of attachment features 164b, and a third column of attachment features 164c. The plurality of splice tray attachment features 110 further includes a first row of attachment features within the plurality of splice tray attachment features 110 that include a first attachment feature 162a, a second attachment feature 162b, and a third attachment feature 162c. The plurality of splice tray attachment features 110 also includes a second row of attachment features that include a first attachment feature 174a, a second attachment feature 174b, and a third attachment feature 174c. The first attachment feature 162a and the first attachment feature 174a are part of the first column of attachment features 164a of the plurality of splice tray attachment features 110. Similarly, the second attachment feature 162b and the second attachment feature 174b are part of the second column of attachment features 164b of the plurality of splice tray attachment features 110, and the third attachment feature 162c and the third attachment feature 174c are part of the third column of attachment features 164c of the plurality of splice tray attachment features 110. The rows and columns of attachment features 110 cooperate to connect the first splice tray 104 to the base structure 100. For example, in the embodiment shown in FIG. 7, the first splice tray 104 is attached to the base structure 100 by way of the first row of attachment features that include the first attachment feature 162a, the second attachment feature 162b, and the third attachment feature 162c.

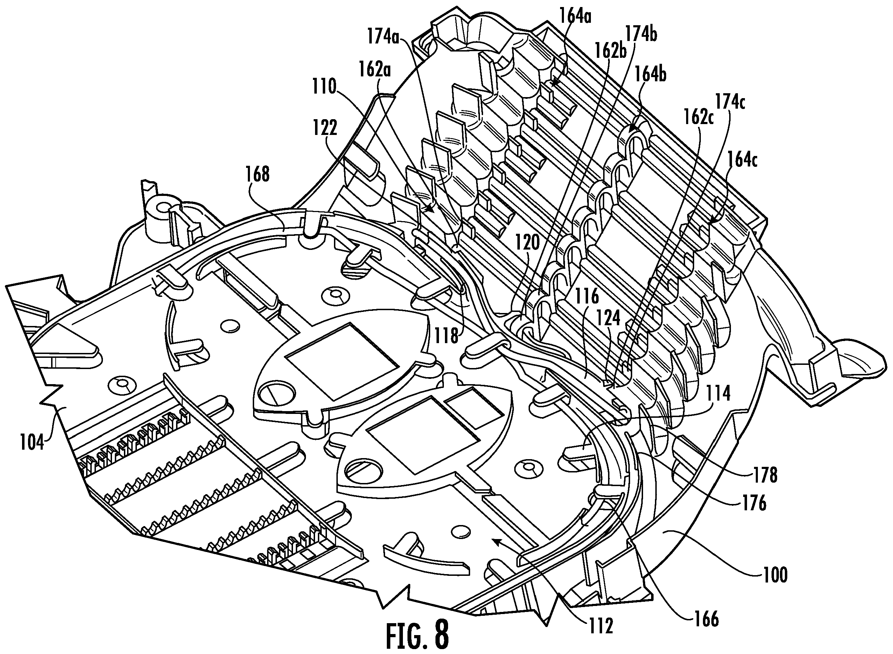

FIG. 8 shows the first splice tray 104 disposed within a row of attachment features of the plurality of splice tray attachment features 110 with a first cable 168 and a second cable 166 routed from the first splice tray 104 to the base structure 100. The base structure 100 also includes a plurality of cable routing features such as first cable routing feature 176, second cable routing feature 178, and third cable routing feature 180. The plurality of cable routing features within the base structure 100 are configured to guide one or more cables to desired positions. For example, the first cable 168 may be routed from cable organization structures 112 (e.g., tab 114) of the first splice tray 104, through a second conduit 116 of the first splice tray 104, and between the first cable routing structure 176 and the second cable routing structure 178 of the base structure 100 such that the first cable 168 maintains a desired organization with respect to the first splice tray 104 and the base structure 100. Similarly, the second cable 166 may be routed from cable organization structures 112 (e.g., tab 114) of the first splice tray 104, through a first conduit 118 of the first splice tray 104, and between other cable routing structures within the base structure 100 such that the second cable 166 maintains a desired organization with respect to the first splice tray 104 and the base structure 100. It should be appreciated that, in some embodiments, the first cable 168 and the second cable 166 may be the same cable, and that, in some other embodiments, the first cable 168 and the second cable 166 may be routed in any other way. For example, the first cable 168 may be routed through the first conduit 118, and/or the second cable 166 may be routed through the second conduit 116. Further, additional cables may be routed. Other routing configurations are also contemplated.

FIG. 9 shows the integrally formed second splice tray attachment features of the second splice tray 102 adjacent to (but not connected to) any of the plurality of splice tray connection features 110 of the base structure 100. As shown, the first attachment feature 140 and the second attachment feature of the second splice tray 102 are not connectable to the first attachment feature 174a, the second attachment feature 174b, and/or the third attachment feature 174c of the base structure 100. For example, the first attachment feature 140 may be a tab that is not slidable within an aperture of the first attachment feature 174a, which is configured to receive a rod-like attachment feature, and the second attachment feature 142 may also be a tab that is not slidable within an aperture of the third attachment feature 174c, which is also configured to receive a rod-like attachment feature.

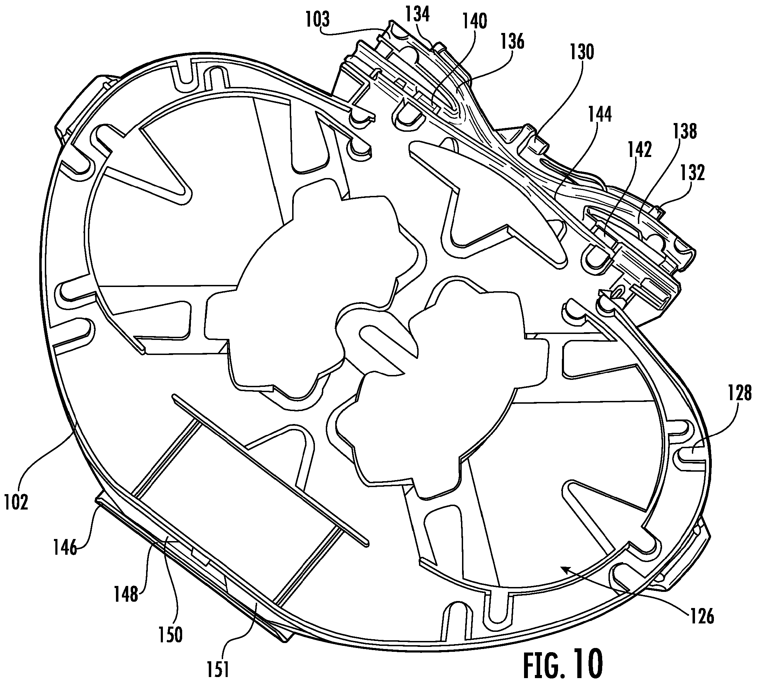

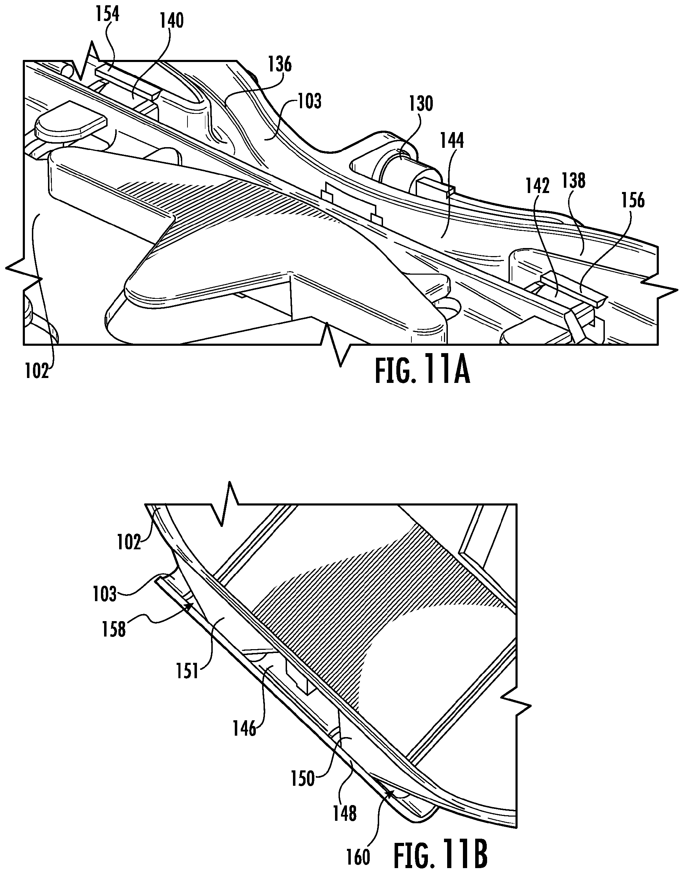

FIG. 10 shows the adapter 103 connected to the second splice tray 102. That is, instead of being connected to the base structure 100, the first attachment feature 140 and the second attachment feature 142 of the second splice tray 102 are connected to the adapter 103. For example, as will be described in more detail with respect to FIG. 11A, the tab of the first attachment feature 140 is slidable under a first tab 154 of the adapter 103, and the tab of the second attachment feature 142 is slidable under a second tab 156 of the adapter 103.

A first portion 144 of the adapter 103 contains integrally formed third splice tray attachment features that are connectable to one of the plurality of splice tray connection features 110 of the base structure 100. In some embodiments, the integrally formed third splice tray attachment features of the adapter 103 may be the same as the integrally formed first splice tray attachment features of the first splice tray 104. For example, the integrally formed third splice tray attachment features of the adapter 103 include a first attachment feature 134, a second attachment feature 130, and a third attachment feature 132. In other embodiments, the adapter 103 may only have the second attachment feature 130 and may still be connectable to one of the plurality of splice tray connection features 110 of the base structure 100. The integrally formed third splice tray attachment features of the adapter 103 may also include a first conduit 136 and a second conduit 138 for guiding one or more cables from the second splice tray 102 to one or more cable routing features of the base structure 100 when the second splice tray 102 and adapter 103 are together connected to the base structure 100.

A second portion 146 of the adapter 103 contains a first connection feature (e.g., a lip 148 along with a first aperture 158 and a second aperture 160, which are better shown in FIGs. 6A and 6C) that is configured to interact with a second connection feature (e.g., tabs 150) on a second end of the second splice tray 102. The second end of the second splice tray 102 is opposite the plurality of splice tray connection features 110 of the base structure 100 when the second splice tray 102 and the adapter 103 are attached to the base structure 100. That is, the first tab 150 and the second tab 151 of the second splice tray 102, which are part of the second connection feature, are configured to interact with the first aperture 158 and the second aperture 160 of the second portion 146 of the adapter 103. Further, in some embodiments, the first portion 144 of the adapter 103 may further include a third connection feature that is configured to interact with a fourth connection feature on a first end of the second splice tray (e.g., first tab 140 and second tab 142 may snap underneath first tab 154 and second tab 156, as best shown in FIG. 11A).

FIG. 11A shows that a first tab 154 and a second tab 156 of the adapter 103 may be configured to interact with the first attachment feature 140 and the second attachment feature 142 of the second splice tray 102. For example, the first tab 154 may be configured to snap over the tab of the first attachment feature 140, and the second tab 156 may be configured to snap over the tab of the second attachment feature 142. In other embodiments, the first tab 154, the second tab 156, the first attachment feature 140, and the second attachment feature 142 may be configured differently. For example, the first attachment feature 140 may be configured to interact with the adapter 103 in a way that requires glue, tape, or any other attachment material, and/or the structures of the first attachment feature 140 and the portion of the adapter 103 in which the first tab 154 is shown may be configured differently such that the interaction is different. Similarly, the second attachment feature 142 may be configured to interact with the adapter 103 in a way that requires glue, tape, or any other attachment material, and/or the structures of the second attachment feature 142 and the portion of the adapter 103 in which the second tab 156 is shown may be configured differently such that the interaction is different.

FIG. 11B shows another view of the interaction between the first tab 150 and the first aperture 158 and between the second tab 151 and the second aperture 160. Further, the lip 148 is configured to snap over the first tab 150 and the second tab 151 in the embodiment shown such that the second portion 146 of the adapter 103 becomes connected to the second splice tray 102. For example, the adapter 103 may be configured to snap onto the second splice tray 102 such that the lip 148 extends around the first tab 150 and the second tab 151 until the first tab pops into the first aperture 158 and the second tab 151 pops into the second aperture 160. Further, the adapter 103 may be configured to be removably connected to the second splice tray 102. It should be appreciated that, in some other embodiments, the first connection feature and the second connection feature may be configured in any other way. For example, in some embodiments, the first connection feature may be located elsewhere on the adapter 103, and/or the second connection feature may be located elsewhere on the second splice tray 102. Further, in some embodiments, for example, the first connection feature and second connection feature may not include tabs and apertures that snap together, but rather may include apertures and pegs, screws, glue, or any other element that allows the adapter 103 to interact with the second splice tray 102.

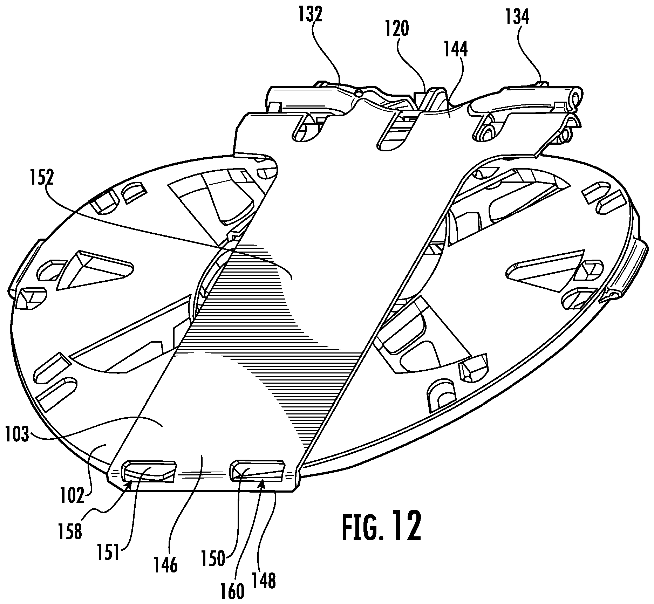

FIG. 12 is a perspective view of the bottom of the adapter 103 attached to the second splice tray 102. As shown, in some embodiments, the adapter 103 may be configured to at least partially wrap around the second slice tray 102. In such embodiments, in addition to the first portion 144 of the adapter and the second portion 146 of the adapter, the adapter may also include a middle portion 152. Further, in some other embodiments, the middle portion 152 may include one or more connection features that are additionally or alternatively configured to interact with and/or connect to the second splice tray 102.

It should be appreciated that, in some embodiments, the adapter 103 may be configured differently. For example, the adapter may not extend along an entire length of the second splice tray 102. Instead, the second connection feature of the second splice tray 102 may be located in a middle portion of the second splice tray 102, and the first connection feature of the adapter 103 may be configured to snap into the middle portion of the second splice tray 102 such that the adapter 103 only wraps around a portion of the second splice tray 102. Other configurations are also contemplated, such as using different types of connection features.

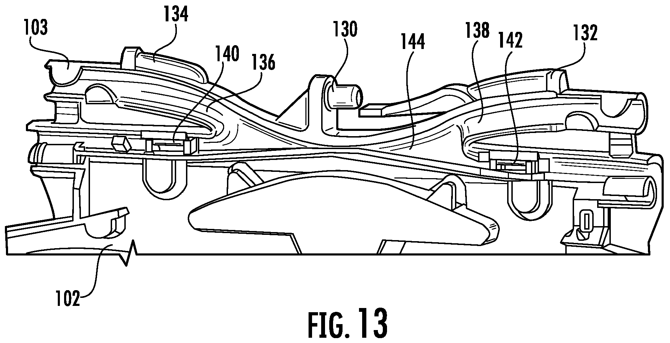

FIG. 13 is a zoomed-in view of a portion of the second splice tray 102 that includes the integrally formed second splice tray attachment features connected to the first portion 144 of the adapter 103, which includes the integrally formed third splice tray attachment features. As shown, the integrally formed second splice tray attachment features include the first attachment feature 140 and the second attachment feature 142, and the integrally formed third splice tray attachment features include the first attachment feature 134, the second attachment feature 130, and the third attachment feature 132, as well as the first conduit 136 and the second conduit 138.

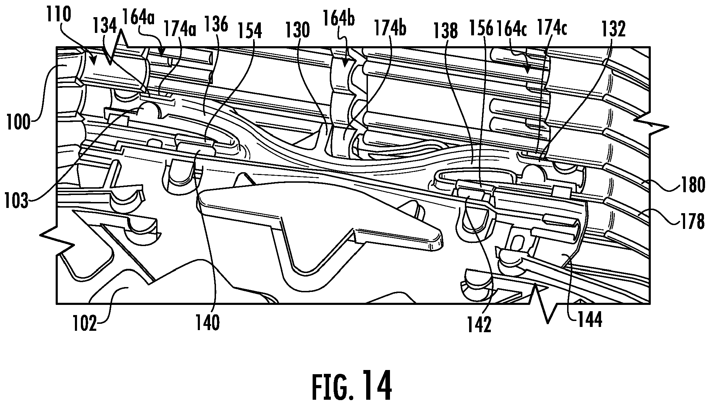

FIG. 14 shows the second splice tray 102 connected to the adapter 103 such that the second splice tray 102 and the adapter 103 are together connectable to a row of attachment features within the plurality of splice tray attachment features 110 of the base structure 100. As shown, the first attachment feature 134 may be configured as a rod-like element that is slidable within an aperture of the first attachment feature 174a of the plurality of splice tray connection features 110. Similarly, the third attachment feature 132 may be configured as a rod-like element that is slidable within an aperture of the third attachment feature 174c of the plurality of splice tray connection features 110. The second attachment feature 130 may be configured as a cylindrical element that is slidable within a larger looped element of the second attachment feature 174b of the plurality of splice tray connection features 110.

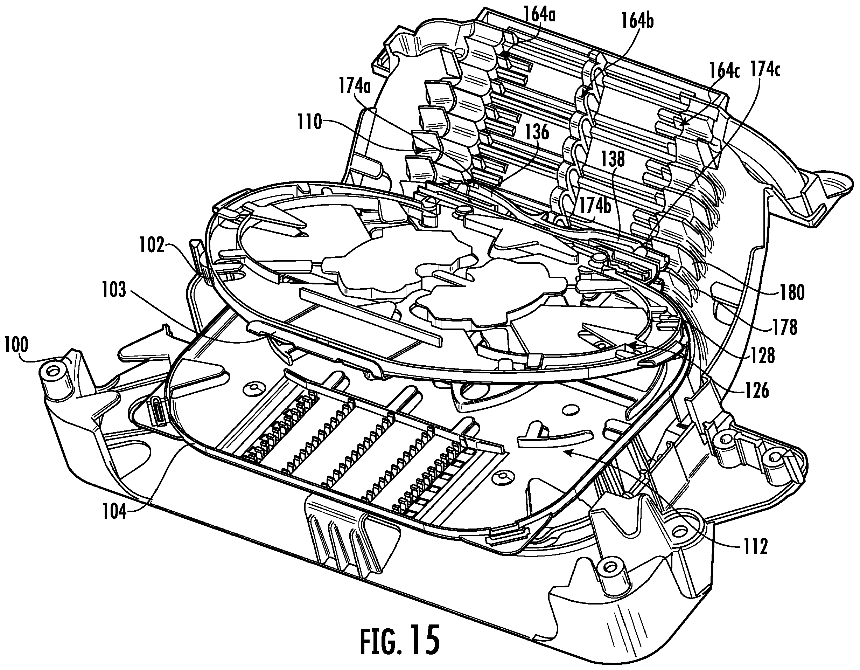

FIG. 15 shows the base structure 100 with the first splice tray 104 and the second splice tray 102 attached therein. The first splice tray 104 is connected to the base structure 100 by the first row of attachment features within the plurality of splice tray attachment features 110 that include the first attachment feature 162a, the second attachment feature 162b, and the third attachment feature 162c, as described herein with respect to FIG. 7. As mentioned previously, the first splice tray 104 has first cable organization structures 112 that are configured to organize one or more cables in a first organization pattern.

The adapter 103 and the second splice tray 102 are connected to the second row of attachment features 110 of the base structure 100, which includes the first attachment feature 174a, the second attachment feature 174b, and the third attachment feature 174c. Similar to the first splice tray 104, the second splice tray 102 has second cable organization structures 126 such as second tab 128 that are configured to organize one or more cables in a second organization pattern. As shown in FIG. 15, the first organization pattern and the second organization pattern are different. Stated another way, the structures of first splice tray 104 and second splice tray 102 are different.

Adapter 103 is used to connect second splice tray 102 onto the base structure 100. As discussed herein, adapter 103 enables more than one type of splice tray to be installed within the base structure 100. This allows for more than one organization pattern to exist within a base structure 100 by enabling more than one type of splice tray 102, 104 to be installed within the base structure 100. This is advantageous because it can prevent a user or installer from having to modify or replace a base structure altogether.

The adapter 103 has no impact on the number of splice trays that can be installed within the base structure 100. For example, multiple splice trays that are identical or similar to the first splice tray 104 can be installed within the base structure 100 at a same time as multiple splice trays (with adapters) that are identical or similar to the second splice tray 102 (with the adapter 103) are installed within the base structure 100, and all of the multiple splice trays can be installed within the base structure 100 in any order. Further, all of the multiple splice trays can be installed within the base structure 100 through connection with the plurality of splice tray connection features 110. The adapter 103 (or variations thereof) does not limit the space within the base structure 100 such that other splice trays or assemblies are prevented from being installed using adjacent splice tray connection features.

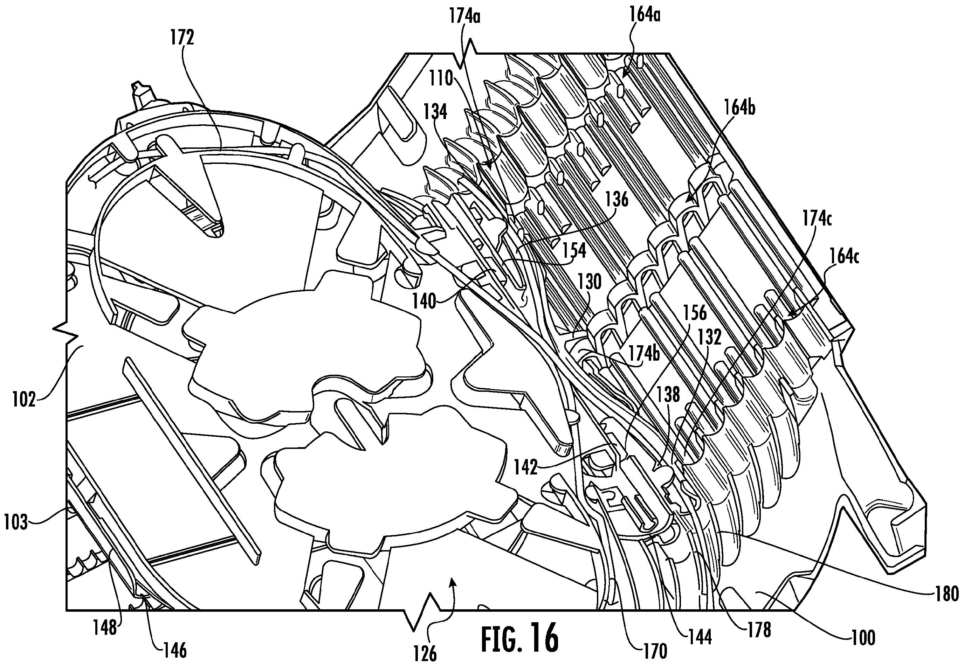

FIG. 16 shows the second splice tray 102 and the adapter 103 together disposed within a row of attachment features of the plurality of splice tray attachment features 110 with a first cable 172 and a second cable 170 routed from the second splice tray 102, through the adapter 103, to the base structure 100. As discussed above with reference to FIG. 8, the plurality of cable routing features (e.g., the second cable routing feature 178 and the third cable routing feature 180) within the base structure 100 are configured to guide one or more cables to desired positions. For example, the first cable 172 may be routed from cable organization structures 126 (e.g., tab 128) of the second splice tray 102, through a second conduit 138 of the adapter 103, and between the second cable routing structure 178 and the third cable routing structure 180 of the base structure 100 such that the first cable 172 maintains a desired organization with respect to the second splice tray 102, the adapter 103, and the base structure 100. Similarly, the second cable 170 may be routed from cable organization structures 126 (e.g., tab 128) of the second splice tray 102, through a first conduit 136 of the adapter 103, and between other cable routing structures within the base structure 100 such that the second cable 170 maintains a desired organization with respect to the second splice tray 102, the adapter 103, and the base structure 100. It should be appreciated that, in some embodiments, the first cable 172 and the second cable 170 may be the same cable, and that, in some other embodiments, the first cable 172 and the second cable 170 may be routed in any other way. For example, the first cable 172 may be routed through the first conduit 136, and/or the second cable 170 may be routed through the second conduit 138. Further, additional cables may be routed. Other routing configurations are also contemplated.

It should be appreciated that the components of the systems and assemblies disclosed herein may be comprised of any material. For example, in some embodiments, the adapter 103 may be comprised of a plastic material. Further, in some embodiments, the first splice tray 104 and the second splice tray 102 may be comprised of a plastic material. However, in some other embodiments, the adapter 103, first splice tray 104, second splice tray 102, and base structure 100 may be comprised of any other material.

It should also be appreciated that the systems and assemblies disclosed herein may have any other connection mechanisms than those discussed and illustrated herein, and further, that the systems and assemblies disclosed herein may have any other attachment features than those discussed and illustrated herein. For example, the first attachment feature 140 and the second attachment feature 142 of the second splice tray 102 may, in some other embodiments, be connectable to a plurality of splice tray connection features of a different base structure, and an adapter may be configured to attach to the first splice tray 104 such that the first splice tray 104 is connectable to the plurality of splice tray connection features of the different base structure. That is, the adapter may have integrally formed splice tray connection features that are similar to the integrally formed first splice tray features of the first splice tray 104. Other attachment features and connection mechanisms are also contemplated.

### Example Flowchart(s)

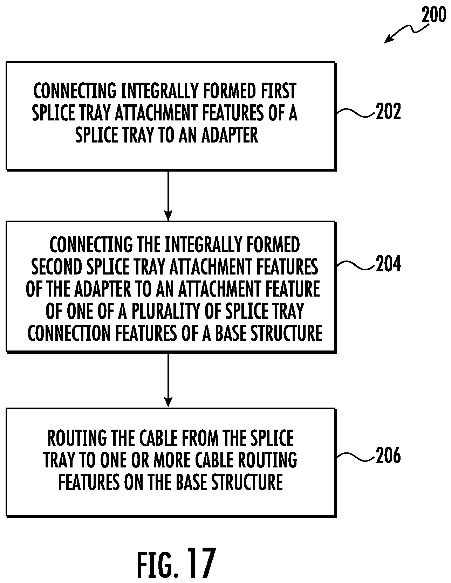

Embodiments of the present disclosure provide various methods for installing a splice tray, such as described herein. Various examples of the operations performed in accordance with some embodiments of the present disclosure will now be provided with reference to FIG. 17. Unless otherwise expressly stated, it is not intended that any method set forth herein be construed as requiring that its steps be performed in a specific order.

FIG. 17 illustrates a flowchart according to an example method 200 of installing a splice tray according to an example embodiment. The method 200 may include connecting integrally formed first splice tray attachment features of a splice tray to an adapter at operation 202. The splice tray may be configured to organize one or more cables in an organization pattern, and the adapter may include integrally formed second splice tray attachment features. In some embodiments, the adapter may include a first portion comprising the integrally formed second splice tray attachment features and a second portion comprising a first connection feature that is configured to interact with a second connection feature on the splice tray. For example, the adapter may be similar or identical to the adapter 103 described herein, and/or the splice tray may be similar or identical to the first splice tray 102 described herein. At operation 204, the method may include connecting the integrally formed second splice tray attachment features of the adapter to an attachment feature of one of a plurality of splice tray connection features of a base structure, as described herein. At operation 206, the method may include routing the cable from the splice tray to one or more cable routing features on the base structure. In some embodiments, routing the cable from the splice tray to one or more cable routing features on the base structure may include routing the one or more cables through one or more conduits on the adapter. For example, operation 206 may include routing the one or more cables similar to the way that the first cable 172 and the second cable 170 are shown as being routed in FIG. 16. The method 200 may also include other operations, such as connecting integrally formed third splice tray attachment features of a second splice tray to a second attachment feature of a second one of the plurality of splice tray connection features of the base structure, the second splice tray being configured to organize the cable in a second organization pattern. Additional operations are also contemplated.

### Conclusion

Many modifications and other embodiments of the disclosures set forth herein will come to mind to one skilled in the art to which these present disclosures pertain having the benefit of the teachings presented in the foregoing descriptions and the associated drawings. Therefore, it is to be understood that the embodiments of the present disclosure are not to be limited to the specific embodiments disclosed and that modifications and other embodiments are intended to be included within the scope of the present disclosure. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the present disclosure. In this regard, for example, different combinations of elements and/or functions than those explicitly described above are also contemplated within the scope of the present disclosure. Although specific terms are employed herein, they are used in a generic and descriptive sense only and not for purposes of limitation.

## Claims

1. A system comprising:
a base structure comprising:
one or more cable routing features; and
a plurality of splice tray connection features, wherein each of the plurality of splice tray connection features comprises an attachment feature configured to receive a corresponding splice tray attachment feature when a splice tray is connected to the base structure using one of the plurality of splice tray connection features, and wherein each of the plurality of splice tray connection features is configured to receive a cable routed in a first configuration within the base structure coming from a connected splice tray and leading to the one or more cable routing features of the base structure;
a first splice tray configured to organize the cable in a first organization pattern, wherein the first splice tray includes integrally formed first splice tray attachment features that are configured to guide the cable into the one or more cable routing features of the base structure when the integrally formed first splice tray attachment features of the first splice tray are attached to a first attachment feature of a first one of the plurality of splice tray connection features of the base structure;
a second splice tray configured to organize the cable in a second organization pattern that is different than the first organization pattern, wherein the second splice tray includes integrally formed second splice tray attachment features; and
an adapter for connection to the second splice tray, wherein the adapter includes integrally formed third splice tray attachment features that are configured to guide the cable into the one or more cable routing features of the base structure when the integrally formed second splice tray attachment features of the second splice tray are attached to the adapter and when the integrally formed third splice tray attachment features of the adapter are attached to a second attachment feature of a second one of the plurality of splice tray connection features of the base structure.

2. The system of claim 1, wherein the integrally formed first splice tray attachment features are the same as the integrally formed third splice tray attachment features.

3. The system of claim 1, wherein the integrally formed second splice tray attachment features of the second splice tray are configured to guide the cable into one or more second cable routing features of a second base structure when the integrally formed second splice tray attachment features of the second splice tray are attached to a third attachment feature of one of a second plurality of splice tray connection features of the second base structure.

4. The system of claim 1, wherein the adapter comprises:
a first portion comprising the integrally formed third splice tray attachment features; and
a second portion comprising a first connection feature that is configured to interact with a second connection feature on the second splice tray.

5. The system of claim 4, wherein the first connection feature and the second connection feature are configured to snap together.

6. The system of claim 4, wherein the first portion further comprises a third connection feature that is configured to interact with a fourth connection feature on a first end of the second splice tray, and wherein the first end of the second splice tray is proximate the base structure when the integrally formed second splice tray attachment features of the second splice tray are attached to the adapter and when the integrally formed third splice tray attachment features of the adapter are attached to the second attachment feature of the second one of the plurality of splice tray connection features of the base structure.

7. The system of claim 6, wherein the third connection feature and the fourth connection feature are configured to snap together.

8. The system of any one of claims 4-7, wherein the second connection feature is located in a middle portion of the second splice tray.

9. The system of any one of claims 4-7, wherein the second connection feature is located on a second end of the second splice tray, and wherein the second end of the second splice tray is opposite the second attachment feature of the second one of the plurality of splice tray connection features of the base structure when the integrally formed second splice tray attachment features of the second splice tray are attached to the adapter and when the integrally formed third splice tray attachment features of the adapter are attached to the second attachment feature of the second one of the plurality of splice tray connection features of the base structure.

10. The system of claim 1, wherein the adapter is configured to wrap around at least a portion of a bottom side of the second splice tray.

11. The system of claim 1, wherein the adapter is configured to be removably connected to the second splice tray.

12. The system of claim 1, wherein the integrally formed third splice tray attachment features of the adapter comprise one or more conduits for guiding the cable into the one or more cable routing features of the base structure.

13. The system of claim 1, wherein the integrally formed first splice tray attachment features of the first splice tray comprise one or more conduits for guiding the cable into the one or more cable routing features of the base structure.

14. The system of claim 1, wherein the adapter is comprised of a plastic material.

15. The system of claim 1, wherein the first splice tray and the second splice tray are comprised of a plastic material.
